# EUROPEAN PATENT SPECIFICATION

(11) **EP 4 389 546 B1**
(45) Date of publication and mention of the grant of the patent: **17.12.2025**
(21) Application number: 23217791.5
(22) Date of filing: 18.12.2023
(51) Int. Cl.: B60T 13/14, B60T 13/00

(54) **IMPROVED CONTROL METHOD FOR HYDRAULICALLY ACTUATED BRAKING SYSTEM FOR A WORK VEHICLE**
VERBESSERTES STEUERUNSVERFAHREN FÜR EIN HYDRAULISCH BETÄTIGTES BREMSSYSTEM FÜR EIN ARBEITSFAHRZEUG
PROCÉDÉ DE COMMANDE D'UN SYSTÈME DE FREINAGE AMÉLIORÉ À ACTIONNEMENT HYDRAULIQUE POUR UN VÉHICULE DE TRAVAIL

(30) Priority: 21.12.2022 IT 202200026253
(43) Date of publication of application: 26.06.2024
(73) Proprietor: CNH Industrial Italia S.p.A., 10156 Torino (IT)
(72) Inventor: BONAVOLONTÀ, Gaetano, 10156 Turin (IT); PINTORE, Francesco, 10156 Turin (IT)
(74) Representative: CNH Industrial IP Department

(56) References cited:
- US-A- 3 962 870
- US-A- 4 809 586
- US-A1- 2006 004 507
- US-A1- 2010 029 440
- US-A1- 2010 141 024
- US-A1- 2013 280 111
- US-A1- 2015 059 860

## Description

### TECHNICAL FIELD

The present invention relates to a hydraulically actuated braking system for a work vehicle and to its control method.

In particular, the present invention relates to a hydraulically actuated braking system for a work vehicle such as a wheel loader.

### BACKGROUND OF THE INVENTION

As known, work vehicles are usually provided with a hydraulically actuated braking system, which is operatively coupled to at least one pair of ground engaging wheels of the work vehicle as shown in US2015/059860A1.

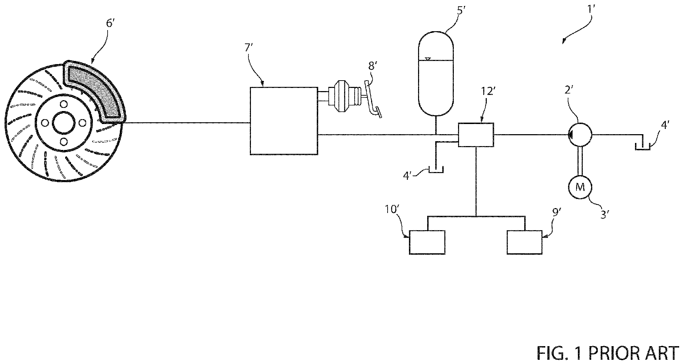

For instance, Figure 1 represents schematically an exemplary embodiment of a hydraulically actuated braking system 1' as known in the art, which comprises:
- a fixed displacement hydraulic pump 2', which is carried by the internal combustion engine 3' of the work vehicle, and is adapted to suck a fluid from a tank 4' carried by a vehicle body and to provide at outlet a pressurized flow of said fluid;
- a hydraulic accumulator 5', which is fluidly connected downstream the hydraulic pump 2' and is adapted to store a predetermined quantity of the pressurized fluid provided at outlet by hydraulic pump 2';
- a hydraulically actuated brake assembly 6', which is carried by a wheel assembly the work vehicle and is configured to apply a braking torque on the wheel assembly; and
- a brake actuation valve assembly 7', which is operatively interposed between hydraulic accumulator 5' and braking assembly **6',** is operated by a brake pedal 8', and is adapted to control the flow and/or the pressure of the pressurized fluid provided by the hydraulic accumulator 7' and fed towards the braking assembly 6' according to the actuation of the brake pedal **8',** so as to modulate the braking effort provided by braking assembly 6'.

In addition, hydraulic pump 2' is fluidly connected to further hydraulically actuated systems of the work vehicle, for instance a lubrication system **9'** and/or a fan 10', in order to provide such systems with a flow of pressurized fluid.

As schematically represented in Figure 1, braking system 1' further comprises a pressure-regulating valve or cut-off valve 12', which is operatively interposed between the hydraulic pump 2' and the hydraulic accumulator 5' and is adapted to regulate the flow of the pressurized fluid fed by the hydraulic pump 2' towards the hydraulic accumulator 5'.

More in detail, if the pressure of the fluid within the hydraulic accumulator 5' is lower than a predetermined threshold, the pressure-regulating valve 12' is configured to route a portion of the pressurized fluid fed by the hydraulic pump 2' within the hydraulic accumulator 5', in order to charge this latter.

If, on the other hand, the pressure of the fluid within the hydraulic accumulator 5' is higher or equal to said predetermined threshold, pressure-regulating valve 12' is configured to close the passage of the pressurized fluid towards the hydraulic accumulator 8 and to route the pressurized fluid fed by hydraulic pump 2' back to tank 4'.

However, since it has a fixed displacement, the flowrate of the pressurized fluid provided at outlet by the hydraulic pump 2' is constrained to the internal combustion engine angular speed.

In particular, it is not possible to adapt the flowrate of the pressurized fluid provided at outlet by hydraulic pump 2' to the intensity of the braking effort temporarily required by the user of the work vehicle by means of brake pedal 8', and a not negligible fraction of such flow of pressurized fluid is continuously routed back to tank 4'.

In other words, a not negligible fraction of such flow of pressurized fluid is wasted, and this entails many drawbacks. For instance, this causes an unnecessary overheating and shortens the useful life of such fluid.

In addition, this reduces the overall efficiency of the work vehicle and results in a waste of a not negligible fraction of the engine torque, thus reducing the maximum available engine torque available to other systems of the work vehicle, for instance a drivetrain assembly or a power-take-off assembly.

In view of the above, the need is felt for an improvement in the hydraulic braking of the work vehicle, in particular to reduce the power losses, to improve work vehicle fuel consumptions and efficiency, and to optimize the work vehicle performances.

Aim of the present invention is to satisfy the above-mentioned needs in a simple and cost effective manner.

### SUMMARY OF THE INVENTION

The aforementioned aims are reached by a method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a hydraulically actuated braking system as known in the prior art;
- Figure 2 is a schematic representation of a first embodiment of a hydraulically actuated braking system according to the present invention; and
- Figure 3 is a schematic representation of a second embodiment of a hydraulically actuated braking system according to the present invention.

### DETAILED DESCRIPTION OF THE INVENTION

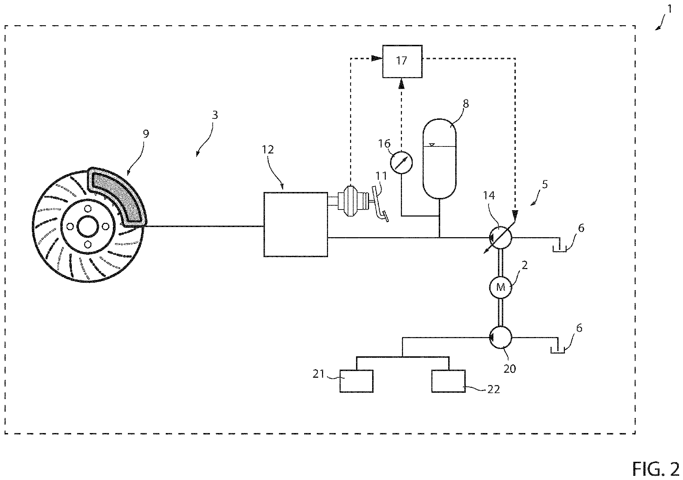

Figure 2 schematically represents a work vehicle, preferably a work vehicle such as a wheel loader, denoted as a whole with reference number 1.

Work vehicle 1 comprises an engine 2, which is carried by a vehicle body (not illustrated) and is configured to provide torque to allow motion of the vehicle body with respect to the ground, e.g. thanks to at least one pair of wheel assemblies (not illustrated).

In particular, engine 2 may be an internal combustion engine, for instance a diesel engine.

In addition, work vehicle 1 comprises a hydraulically actuated braking system 3, which is operatively coupled to at least a pair of wheel assemblies of work vehicle 1 and is configured to provide a braking torque during deceleration and/or retarding operations of work vehicle 1.

More in detail, with reference to Figure 2, braking system 3 comprises variable flowrate pumping means 5, which are adapted to suck a hydraulic fluid from a tank 6 carried by the work vehicle body and are adapted to provide at outlet a pressurized flow of such hydraulic fluid.

In addition, braking system 3 comprises at least one hydraulic accumulator or pressure storage reservoir 8, which is fluidly connected downstream the variable flowrate pumping means 5 and is adapted to store/accumulate the pressurized hydraulic fluid provided at outlet by variable flowrate pumping means 5, preferably within a predetermined pressure range. Preferably, such predetermined pressure range may be lower or equal to about 240 bar, and more in detail may be comprised between 140 and 200 bar.

In other words, the variable flowrate pumping means 5 are adapted to charge the hydraulic accumulator 8 with the pressurized hydraulic fluid. The hydraulic accumulator 8, in turn, is adapted to feed a flow of the pressurized hydraulic fluid stored therein towards brake assembly 9.

Preferably, hydraulic accumulator 8 is fluidly connected directly (immediately) downstream variable flowrate pumping means 5.

In addition, variable flowrate pumping means 5 are preferably configured to feed pressurized hydraulic fluid only towards the hydraulic accumulator 8.

Moreover, braking system 3 comprises a hydraulically actuated brake assembly 9, which is operatively coupled to a wheel assembly of the work vehicle 1 and is configured to apply a braking torque to the same wheel assembly.

In particular, brake assembly 9 may be carried by the wheel assembly of the work vehicle 1.

More in detail, the hydraulically actuated brake assembly 9 is fluidly connected downstream the hydraulic accumulator 8 and is adapted to receive a flow of pressurized hydraulic fluid from this latter, in order to be operated. The hydraulic actuated brake assembly 9 is known in the art, and therefore it will not be described further.

In addition, with reference to the exemplary embodiment represented in Figure 2, brake system 3 further comprises a braking input device 11, for instance one or more braking pedals and/or a joystick carried in a driver's cabin of work vehicle 1, which is configured to be operated by the driver in order to control the operation of brake system 3.

With reference to Figure 2, braking system 3 further comprises a brake actuation valve assembly 12, which is operatively interposed between hydraulic accumulator 8 and brake assembly 9.

More in detail, brake actuation valve assembly 12 is operatively connected to braking input device 11 and is configured to regulate the flow of pressurized hydraulic fluid fed from hydraulic accumulator 8 towards the brake assembly 9 according to the actuation of braking input device 11, so as to modulate the braking torque provided by brake assembly 9 accordingly.

With reference to the embodiment illustrated in Figure 2, variable flowrate pumping means 5 preferably comprise a variable displacement hydraulic pump 14 carried by engine 2.

More in detail, variable displacement hydraulic pump is mechanically coupled to engine 2, so as to be able to be driven in rotation by this latter.

In addition, with reference to the exemplary embodiment illustrated in Figure 2, braking system 3 may further comprise sensing means 16, which are configured to measure the pressure of the pressurized hydraulic fluid stored within the hydraulic accumulator 8.

Preferably, such sensing means may comprise a pressure transducer operatively connected to hydraulic accumulator 8 and configured to measure the pressure of the pressurized hydraulic fluid stored therein.

In addition, according to the described embodiment, braking system 3 may further comprise an electronic control unit 17, e.g. the ECU of the work vehicle 1, which is operatively connected at least to sensing means 16 and/or to brake input device 11.

Alternatively, electronic control unit 17 may be separate and distinct from work vehicle 1 ECU and may be electronically connected to the same work vehicle 1 ECU.

In particular, electronic control unit 17 is preferably provided with elaboration means configured to retrieve data from sensing means 16 related to the pressure of the pressurized hydraulic fluid within the hydraulic accumulator 8 and/or to retrieve data from brake input device 11 related to the operation of this latter, such as its current position along its stroke and/or the pressure applied by the driver of work vehicle on brake input device 11.

Furthermore, electronic control unit 17 may be configured to control the operation of variable flowrate pumping means 5 according to the data retrieved from brake input device 11 and/or sensing means 16.

In particular, electronic control unit 17 may be configured to control the operation of variable flowrate pumping means 5 in order to keep the pressure of the pressurized hydraulic fluid stored in the hydraulic accumulator 8 within the predetermined pressure range, so that the hydraulic accumulator 8 is kept properly charged and is able to provide pressurized hydraulic fluid towards the brake assembly 9 during braking operation.

In other words, electronic control unit 17 may be configured to control the variable flowrate pumping means 5 according to the data retrieved from brake input device 11 and/or sensing means 16, in order to control the flowrate of the hydraulic fluid provided at outlet by the same variable flowrate pumping means 5.

More in detail, electronic control unit 17 may be configured to control the variable flowrate pumping means 5 so as to increase the flowrate of the pressurized hydraulic fluid provided at outlet by the same variable flowrate pumping means 5 when the work vehicle 1 driver operates the brake input device 11 and/or the pressure of the pressurized hydraulic fluid within the hydraulic accumulator 8 drops below said predetermined pressure range, so as to charge hydraulic accumulator 8.

In addition, electronic control unit 17 may be configured to control the variable flowrate pumping means 5 so as to decrease and/or stop the flowrate of the pressurized hydraulic fluid provided at outlet by the same variable flowrate pumping means 5 when the work vehicle 1 driver is not operating the brake input device 11 and/or the pressure of the pressurized hydraulic fluid stored in the hydraulic accumulator 8 falls within said predetermined range.

In particular, electronic control unit 17 may be configured to control the displacement of variable displacement hydraulic pump 14 according to the data retrieved from brake input device 11 and/or sensing means 16, in order to control accordingly the flowrate of pressurized hydraulic fluid provided at outlet by the same variable displacement hydraulic pump 14.

More in detail, electronic control unit 17 may be configured to increase the displacement of variable displacement hydraulic pump 14 when the work vehicle 1 driver is operating the brake input device 11 and/or the pressure of the hydraulic fluid within hydraulic accumulator 8 drops below said predetermined pressure range, in order to increase the flowrate of hydraulic fluid provided at outlet by the same variable displacement hydraulic pump 14.

In addition, electronic control unit 17 may be configured to reduce the displacement of variable displacement hydraulic pump 14 when the work vehicle 1 driver is not operating the brake input device 11 and/or the pressure of the hydraulic fluid within hydraulic accumulator 8 falls within said predetermined pressure range, in order to decrease and/or stop the flowrate of hydraulic fluid provided at outlet by the same variable displacement hydraulic pump 14.

With reference to the exemplary embodiment depicted in Figure 2, work vehicle 1 may additionally comprise a further hydraulic pump 20, separate and distinct from variable flowrate pumping means **5,** which is adapted to suck hydraulic fluid from tank 6 and is adapted to provide at outlet a pressurized flow of such hydraulic fluid. The flow of pressurized hydraulic fluid provided at outlet by hydraulic pump 20, in particular, may be fed to a fan 21, a lubrication circuit 22 and/or other hydraulically actuated systems carried by work vehicle **1.**

Preferably, hydraulic pump 20 is a fixed displacement hydraulic pump.

In addition, hydraulic pump 20 is fluidly separated from hydraulic accumulator 8, meaning that it is not adapted to provide at outlet pressurized flow of hydraulic fluid towards hydraulic accumulator 8.

The operation of the above-described embodiment is the following.

When the driver of work vehicle 1 does not operate brake input device 11, brake actuation valve assembly 12 does not allow the pressurized hydraulic fluid to flow from hydraulic accumulator 8 towards brake assembly 9.

In addition, when the driver of work vehicle 1 does not operate brake input device 11 and the pressure of the pressurized hydraulic fluid stored in the hydraulic accumulator 8 falls within said predetermined range, electronic control unit 17 controls the variable flowrate pumping means 5 in order to decrease and/or stop the flowrate of hydraulic fluid provided at outlet by these latter.

Then, when the driver of work vehicle 1 operates braking input device 11, i.e. he pushes the brake pedal, brake actuation valve assembly 12 puts the hydraulic accumulator 11 in direct fluid communication with brake assembly 9, so that the pressurized fluid stored in the hydraulic accumulator 11 may be fed towards brake assembly 9, to operate this latter and brake work vehicle 1 accordingly.

In addition, when the driver of work vehicle 1 operates braking input device 11, i.e. he pushes the brake pedal, and the pressure of the pressurized fluid stored in the hydraulic accumulator 8 drops below said predetermined range, electronic control unit 17 controls the variable flowrate pumping means 5 in order to increase the flowrate of hydraulic fluid provided at outlet by these latter, in order to charge the hydraulic accumulator 8.

In view of the above, the present invention is further directed to a method for controlling the hydraulically actuated braking system 3 as described above and comprising at least the following steps:
i) retrieving data related to the pressure of the hydraulic fluid stored within the hydraulic accumulator 8 from sensing means 16,
ii) retrieving data related to the operation of brake input device 11, and
iii) controlling the operation of the variable flowrate pumping means 5 as function of the data retrieved at steps i) and ii), in order to keep the pressure of the pressurized hydraulic fluid stored in hydraulic accumulator 8 within said predetermined pressure range.

More in detail, above step iii) preferably comprises the step of controlling the variable flowrate pumping means 5 in order to increase the flowrate of the pressurized hydraulic fluid provided at outlet by the same variable flowrate pumping means 5 when work vehicle 1 driver operates brake input device 11 and/or the pressure of the pressurized hydraulic fluid stored within the hydraulic accumulator 8 drops below said predetermined pressure range.

In addition, above step iii) preferably further comprises the steps of controlling the variable flowrate pumping means 5 in order to decrease or stop the flowrate of the pressurized hydraulic fluid provided at outlet by the same variable flowrate pumping means 5 when the work vehicle 1 driver does not operate the brake input device 11 and/or the pressure of the pressurized hydraulic fluid stored within the hydraulic accumulator 8 falls within said predetermined pressure range.

In even more detail, above step iii) may comprise the step of controlling the displacement of the variable displacement hydraulic pump 14 according to the data retrieved from sensing means 16 and/or from brake input device 11, in order to control accordingly the flowrate of pressurized hydraulic fluid provided at outlet by the same variable displacement hydraulic pump 14.

In particular, the method may comprise the step of increasing the displacement of variable displacement hydraulic pump 14 when the work vehicle 1 driver is operating the brake input device 11 and/or the pressure of the hydraulic fluid within hydraulic accumulator 8 drops below said predetermined pressure range, in order to increase the flowrate of hydraulic fluid provided at outlet by the same variable displacement hydraulic pump 14.

In addition, the method may comprise the step of reducing the displacement of variable displacement hydraulic pump 14 when the work vehicle 1 driver is not operating the brake input device 11 and/or the pressure of the hydraulic fluid within hydraulic accumulator 8 falls within said predetermined pressure range, in order to decrease and/or stop the flowrate of hydraulic fluid provided at outlet by the same variable displacement hydraulic pump 14.

In view of the foregoing, the advantages of the hydraulically actuated braking system 3 and of the control method thereof according to the invention are apparent.

Firstly, the use of variable flowrate pumping means 5 allows to minimize the amount of flow of pressurized fluid that is routed back to the tank 6, thus avoiding the overheating and shortage of the useful life of such fluid.

In particular, the use of variable flowrate pumping means 5 allow to feed the flow of pressurized fluid towards the hydraulic accumulator only when required during braking operation of work vehicle 1, with all the benefits that this entails.

In addition, the use of variable flowrate pumping means 5 allows to reduce the fraction of torque absorbed by such pumping means 5 from engine 2, thus increasing the efficiency of work vehicle 1, reducing its fuel consumption and increasing the amount of torque available for other systems carried by engine 2, for instance a drivetrain assembly or a power-take-off assembly of work vehicle 1.

Lastly, the use of variable flowrate pumping means 5 allows to simplify the arrangement of the braking system 3 and to reduce the number of its components, with all the benefits that this entails. Indeed, the presence of a pressure-regulating valve or cut-off valve located immediately upstream the hydraulic accumulator 8 and adapted to regulate the pressure of the fluid therein is no more mandatory, as the pressure of the fluid within the hydraulic accumulator 8 may be controlled directly by the variable flowrate pumping means 5.

It is clear that modification can be made to work vehicle 1, to hydraulically actuated braking system 3 and to its control method that do not extend beyond the scope of protection defined by the appended set of claims.

For instance, according to a first alternative embodiment, braking system 3 may comprise a pressure-regulating valve or cut-off valve (not illustrated), which is operatively interposed between the variable flowrate pumping means 5 and the hydraulic accumulator 8, and is adapted to regulate the flow of the pressurized hydraulic fluid fed by the variable flowrate pumping means 5 towards the hydraulic accumulator 8.

More in detail, if the pressure of the hydraulic fluid within the hydraulic accumulator 8 is lower than said predetermined pressure threshold, the pressure-regulating valve is configured to route at least a portion of the pressurized hydraulic fluid fed by the variable flowrate pumping means 5 within the hydraulic accumulator 8, in order to charge this latter.

If, on the other hand, the pressure of the hydraulic fluid within the hydraulic accumulator 8 falls within said predetermined pressure threshold, said pressure-regulating valve may be configured to close the passage of the pressurized hydraulic fluid towards the hydraulic accumulator 8 and eventually to route the pressurized hydraulic fluid fed by variable flowrate pumping means 5 back to tank 6.

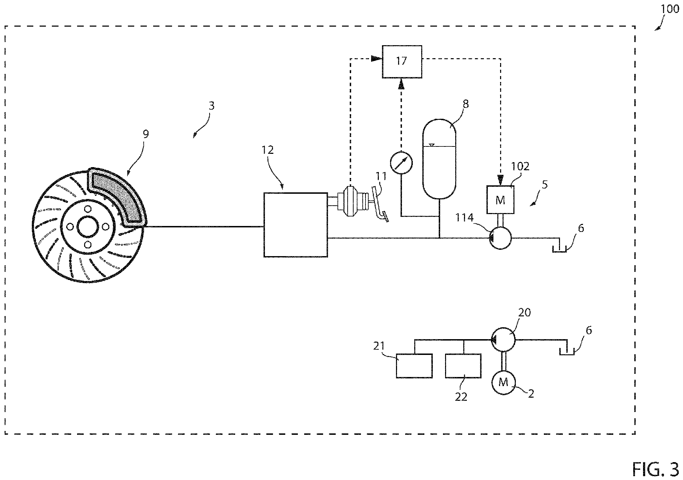

In addition, Figure 3 illustrates a further alternative embodiment of the work vehicle 100 that is similar to the embodiment of the work vehicle 1 illustrated in Figure 2, the parts of which will be referred to as, where possible, with the same reference numbers that distinguish corresponding parts of work vehicle 1.

Work vehicle 100 distinguishes from work vehicle 1 in that variable flowrate pumping means 5 comprises an electric motor 102, separate and distinct from engine 2, and a fixed displacement hydraulic pump 114 carried by electric motor 102.

In particular, fixed displacement hydraulic pump 114 is mechanically coupled to electric motor 102, in order to be driven into rotation by this latter.

Preferably, fixed displacement hydraulic pump 114 is separate and distinct from hydraulic pump 20, and electric motor 102 is preferably configured in order to be coupled only to hydraulic pump 114.

Lastly, electronic control unit 17 may electrically connected to electric motor 102 and may be configured to control the operation of the same electric motor 102 according to the data retrieved from brake input device 11 and/or sensing means 16, in order to control accordingly the flowrate of pressurized fluid provided at outlet by fixed displacement hydraulic pump 114.

## Claims

1. A method for controlling a hydraulically actuated braking system (3) for a work vehicle (1, 100), wherein said braking system (3) comprising:
• variable flowrate pumping means (5), which are adapted to suck a hydraulic fluid from a tank (6) carried by a work vehicle body, and are adapted to provide at outlet a pressurized flow of said hydraulic fluid;
• a hydraulic accumulator (8), which is fluidly connected downstream to said variable flowrate pumping means (5) and is adapted to store the pressurized hydraulic fluid fed by said variable flowrate pumping means (5);
• a hydraulically actuated brake assembly (9), which is operatively coupled to a wheel assembly of said work vehicle (1) and is fluidly connected to said hydraulic accumulator (8);
• a brake input device (11), which is adapted to be operated to control the operation of said brake assembly (9); and
a brake actuation valve assembly (12), which is fluidly interposed between said hydraulic accumulator (8) and said brake assembly (9), is operatively connected to said braking input device (11), and is configured to control the flow of said pressurized hydraulic fluid from said hydraulic accumulator (8) to said brake assembly (9) according to the actuation of said braking input device (11),
said method comprising the following steps:
i) retrieving data related to the pressure of said hydraulic fluid stored within said hydraulic accumulator (8),
ii) retrieving data related to the operation of said brake input device (11), and
iii) controlling the operation of said variable flowrate pumping means (5) as function of the data retrieved at steps i) and ii), in order to keep the pressure of said pressurized hydraulic fluid stored in said hydraulic accumulator (8) within a predetermined pressure range,
the method is **characterized in that** said step iii) comprises the steps of:
iv) controlling said variable flowrate pumping means (5) in order to increase the flowrate of said pressurized hydraulic fluid provided at outlet by said variable flowrate pumping means (5) when said brake input device is operated (11) and/or the pressure of said pressurized hydraulic fluid within said hydraulic accumulator (8) drops below said predetermined pressure range; or
v) controlling said variable flowrate pumping means (5) in order to decrease and/or stop the flowrate of said pressurized hydraulic fluid provided at outlet by said variable flowrate pumping means (5) when said brake input device is not operated (11) and/or the pressure of said pressurized hydraulic fluid within said hydraulic accumulator (8) falls within said predetermined pressure range.

## Patentansprüche

1. Verfahren zum Steuern eines hydraulisch betätigten Bremssystems (3) für ein Arbeitsfahrzeug (1, 100), wobei das Bremssystem (3) umfasst:
• Fördermittel (5) mit variabler Fördermenge, die dazu eingerichtet sind, ein Hydraulikfluid aus einem Behälter (6), der von einem Fahrzeugkörper des Arbeitsfahrzeugs getragen wird, anzusaugen und am Auslass einen unter Druck stehenden Strom des Hydraulikfluids bereitzustellen;
• einen Hydraulikspeicher (8), der stromabwärts der Fördermittel (5) mit variabler Fördermenge fluidtechnisch angebunden ist und dazu eingerichtet ist, das von den Fördermitteln (5) mit variabler Fördermenge zugeführte unter Druck stehende Hydraulikfluid zu speichern;
• eine hydraulisch betätigte Bremsanordnung (9), die wirkend mit einer Radanordnung des Arbeitsfahrzeugs (1) gekoppelt ist und mit dem Hydraulikspeicher (8) in Fluidverbindung steht ist;
• eine Bremseingabeeinrichtung (11), die dazu eingerichtet ist, betätigt zu werden, um den Betrieb der Bremsanordnung (9) zu steuern; und
• eine Bremsbetätigungsventilanordnung (12), die fluidtechnisch zwischen dem Hydraulikspeicher (8) und der Bremsanordnung (9) angeordnet ist, wirkend mit der Bremseingabeeinrichtung (11) verbunden ist und dazu eingerichtet ist, den Strom des unter Druck stehenden Hydraulikfluids vom Hydraulikspeicher (8) zur Bremsanordnung (9) gemäß der Betätigung der Bremseingabeeinrichtung (11) zu steuern,
wobei das Verfahren die folgenden Schritte umfasst:
i) Abrufen von Daten in Bezug auf den Druck des in dem Hydraulikspeicher (8) gespeicherten Hydraulikfluids,
ii) Abrufen von Daten in Bezug auf den Betrieb der Bremseingabeeinrichtung (11), und
iii) Steuern des Betriebs der Fördermittel (5) mit variabler Fördermenge in Abhängigkeit von den in den Schritten i) und ii) abgerufenen Daten, um den Druck des in dem Hydraulikspeicher (8) gespeicherten unter Druck stehenden Hydraulikfluids innerhalb eines vorbestimmten Druckbereichs zu halten,
wobei das Verfahren **dadurch gekennzeichnet ist, dass** der Schritt iii) die Schritte umfasst:
iv) Steuern der Fördermittel (5) mit variabler Fördermenge, um die Fördermenge des am Auslass von den Fördermitteln (5) mit variabler Fördermenge bereitgestellten unter Druck stehenden Hydraulikfluids zu erhöhen, wenn die Bremseingabeeinrichtung (11) betätigt wird und/oder der Druck des unter Druck stehenden Hydraulikfluids innerhalb des Hydraulikspeichers (8) unter den vorbestimmten Druckbereich abfällt; oder
v) Steuern der Fördermittel (5) mit variabler Fördermenge, um die Fördermenge des am Auslass von den Fördermitteln (5) mit variabler Fördermenge bereitgestellten unter Druck stehenden Hydraulikfluids zu verringern und/oder zu stoppen, wenn die Bremseingabeeinrichtung (11) nicht betätigt wird und/oder der Druck des unter Druck stehenden Hydraulikfluids innerhalb des Hydraulikspeichers (8) innerhalb des vorbestimmten Druckbereichs liegt.

## Revendications

1. Un procédé de commande d'un système de freinage à actionnement hydraulique (3) pour un véhicule de travail (1, 100), dans lequel ledit système de freinage (3) comprend :
• des moyens de pompage à débit variable (5), qui sont adaptés pour aspirer un fluide hydraulique à partir d'un réservoir (6) soutenu par une carrosserie de véhicule de travail, et sont adaptés pour fournir à la sortie un flux sous pression dudit fluide hydraulique ;
• un accumulateur hydraulique (8), qui est raccordé fluidiquement en aval auxdits moyens de pompage à débit variable (5) et qui est adapté pour stocker le fluide hydraulique sous pression alimenté par lesdits moyens de pompage à débit variable (5) ;
• un ensemble de freinage à actionnement hydraulique (9), qui est couplé fonctionnellement à un ensemble de roues dudit véhicule de travail (1) et est raccordé fluidiquement audit accumulateur hydraulique (8) ;
• un dispositif d'entrée de freinage (11), qui est adapté pour être actionné afin de commander le fonctionnement dudit ensemble de freinage (9) ; et
• un ensemble de valve de commande de frein (12), qui est interposé fluidiquement entre ledit accumulateur hydraulique (8) et ledit ensemble de freinage (9), est raccordé fonctionnellement audit dispositif d'entrée de freinage (11) et est configuré pour commander l'écoulement dudit fluide hydraulique sous pression à partir dudit accumulateur hydraulique (8) vers ledit ensemble de freinage (9) en fonction de l'actionnement dudit dispositif d'entrée de freinage (11),
ledit procédé comprenant les étapes suivantes consistant à :
i) récupérer les données relatives à la pression dudit fluide hydraulique stocké dans ledit accumulateur hydraulique (8),
ii) récupérer des données relatives au fonctionnement dudit dispositif d'entrée de freinage (11), et
iii) commander le fonctionnement desdits moyens de pompage à débit variable (5) en fonction des données récupérées aux étapes i) et ii), afin de maintenir la pression dudit fluide hydraulique sous pression stocké dans ledit accumulateur hydraulique (8) dans une plage de pression prédéterminée,
le procédé étant **caractérisé en ce que** ladite étape iii) comprend les étapes consistant à :
iv) commander lesdits moyens de pompage à débit variable (5) afin d'augmenter le débit dudit fluide hydraulique sous pression fourni à la sortie par lesdits moyens de pompage à débit variable (5) lorsque ledit dispositif d'entrée de freinage est actionné (11) et/ou lorsque la pression dudit fluide hydraulique sous pression à l'intérieur dudit accumulateur hydraulique (8) chute en dessous de ladite plage de pression prédéterminée ; ou
v) commander lesdits moyens de pompage à débit variable (5) afin de diminuer et/ou d'arrêter le débit dudit fluide hydraulique sous pression fourni à la sortie par lesdits moyens de pompage à débit variable (5) lorsque ledit dispositif d'entrée de freinage n'est pas actionné (11) et/ou lorsque la pression dudit fluide hydraulique sous pression à l'intérieur dudit accumulateur hydraulique (8) tombe dans ladite plage de pression prédéterminée.
